# EUROPEAN PATENT SPECIFICATION

(11) **EP 1 048 496 B1**
(45) Date of publication and mention of the grant of the patent: **21.05.2003**
(21) Application number: 00201014.8
(22) Date of filing: 20.03.2000
(51) Int. Cl.: B60C 25/132, B60C 25/135

(54) **Tyre removal machine for tyres of "system pax" type and the like**
Reifendemontiervorrichtung für "system pax"- Reifen oder ähnlichem
Machine pour le démontage de pneus du type "system pax" et analogues

(30) Priority: 30.04.1999 IT RE990053
(43) Date of publication of application: 02.11.2000
(73) Proprietor: CORGHI S.p.A., I-42015 Correggio Emilia (Reggio Emilia) (IT)
(72) Inventor: Corghi, Remo, 42015 Correggio, (Reggio Emilia) (IT)
(74) Representative: Corradini, Corrado

(56) References cited:
- EP-A- 0 482 701
- DE-A- 2 241 103
- FR-A- 2 699 121

## Description

This invention relates to machines for mounting and removing a tyre on and from a wheel rim, and in particular to machines able to operate on that new type of tyre which enables the vehicle to travel even if the inflation pressure is deficient.

Tyres of the stated type, such as the System Pax tyre produced by Michelin, enable the vehicle to travel even when their inflation pressure is very low or close to zero, as in the case of a puncture.

These tyres comprise not only the outer carcass but also a separate toroidal support ring of elastomer rubber, which is housed in an appropriate seat provided in the well of the wheel rim.

To enable the tyre and the toroidal support ring to be mounted on the wheel rim, both the wheel rim and the tyre have special profiles.

Specifically, the tyre has different diameters across the beads, with the result that the wheel rim is not symmetrical about the plane passing through its centre, the seats for receiving the beads being of different diameters.

These special new tyres, which are described in French patent applications 2 699 121 and 2 713 558, are encountering increasing interest by automobile manufacturers because of their intrinsic characteristics, the intention of these manufacturers being to use them as standard on their automobiles.

However, to remove or mount these special tyres from or on the wheel rim, a procedure has to be followed which cannot be implemented with tyre removal machines of traditional type, as shown, e.g. in EP-A-482 701, because of the asymmetry of the tyre beads and the need to insert the toroidal ring.

Consequently, tyre removal machine manufacturers provide equipment for fitting to traditional tyre removal machines to enable this new type of tyre to be mounted and removed on and from the respective wheel rim.

However, because of the large weight of the tyre, which can reach 50 kg, known machines even though provided with the said equipment require the operator to exert considerable physical force to position the tyre on the machine.

An object of the invention is to overcome the aforesaid drawbacks within the framework of a rational and reliable solution, which simplifies and accelerates the work of the operator.

This and further objects are attained according to the invention by a machine having the characteristics defined in the claims.

The operational and constructional characteristics will be apparent from the ensuing description of a preferred embodiment thereof given by way of non-limiting example and illustrated on the accompanying drawings.

Figure 1 is a perspective view of the tyre removal machine of the invention.

Figure 2 is a section on the line II-II of Figure 1.

Figure 3 is a front view of the tyre removal machine of the invention.

Figure 4 is an enlarged view of a detail of the invention.

Figure 5 is a section on the line V-V of Figure 3.

Figures 6, 7, 8, 9 and 10 show in succession the steps involved in mounting the tyre on the wheel rim using the machine of the invention.

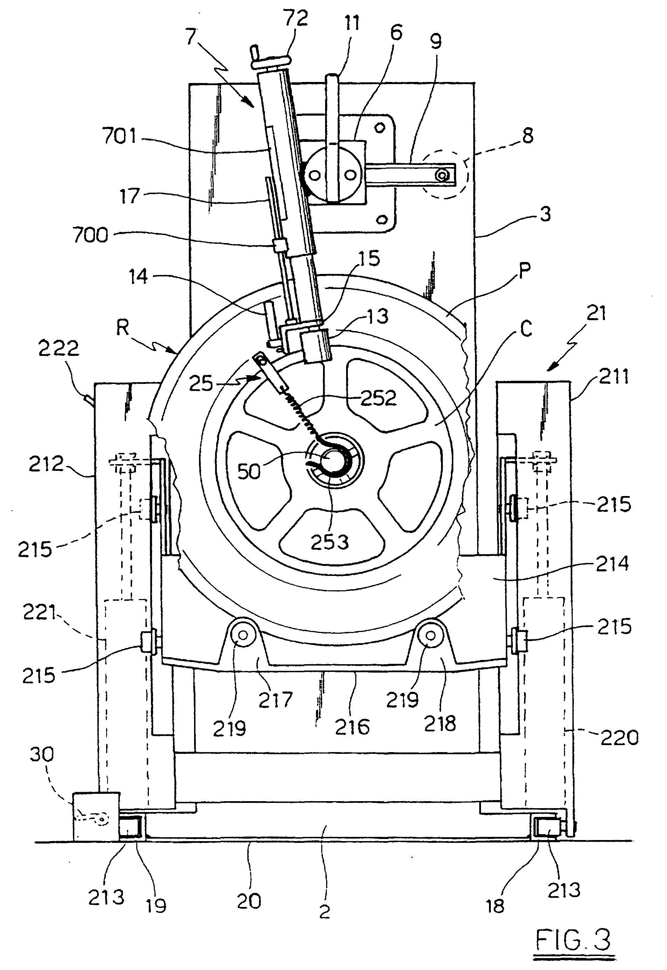

Said figures show the tyre removal machine, indicated overall by 1 and comprising a base 2 from which there rises a column 3 the interior of which houses a pneumatic motor 4 provided with a usual step-down gear, the horizontal shaft 5 of which emerges from the front of the column 3 and is arranged to receive the hub of the wheel rim C, as shown in Figure 3.

In proximity to its upper end the column 3 comprises two opposing rectangular holes 20 which receive a movable bar 6 of rectangular cross-section supporting at its front a telescopic bar 7, to the lower end of which the tools used in mounting and removing the tyre are fixed.

The bar 6 can traverse horizontally, driven by the pneumatic cylinder-piston unit 8 positioned within the column 3 and having its rod 6 connected to said bar 6 by the bar 9.

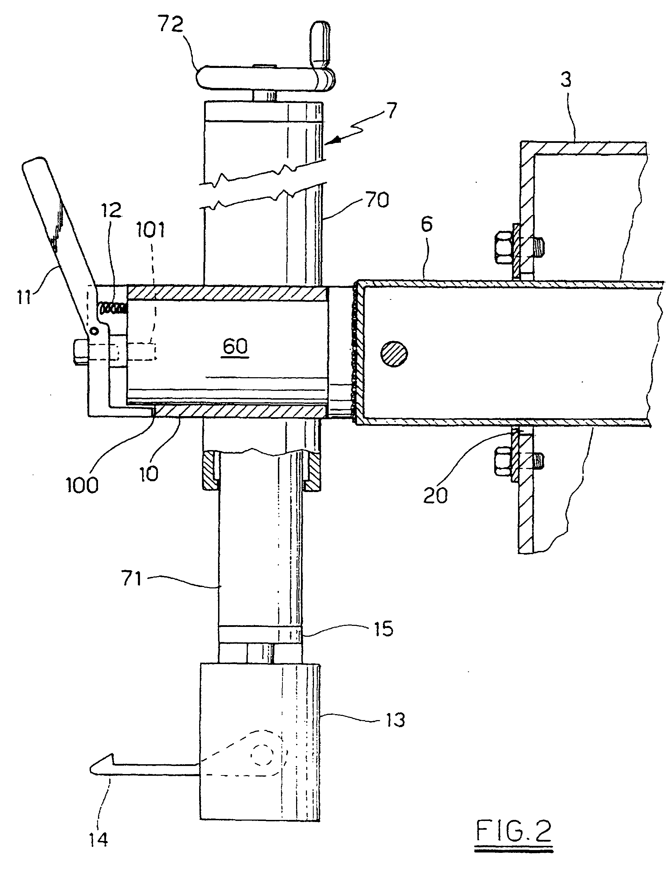

With particular reference to Figure 2, the bar 6 has at its front a stem 60 of circular cross-section, on which there is mounted a sleeve 10, to the outside of which the tube 70 of the telescopic bar 7 is welded.

The sleeve 10 can rotate about its axis, to be locked in two different angular positions such as to locate the telescopic column 7 in a first position in which its axis is substantially vertical and in a second position in which its axis is substantially horizontal.

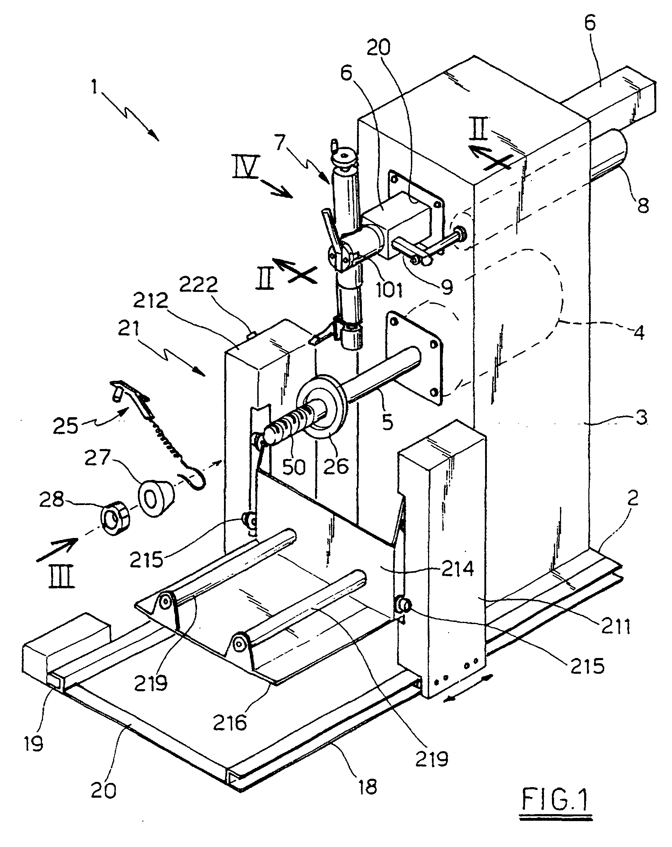

For this purpose the sleeve 10 comprises two recesses 100 and 101, shown in Figures 1 and 2 respectively, which are angularly spaced apart by about 90° to receive the front part of a locking lever 11 normally maintained in position by a spring 12.

The tube 70 is internally hollow and receives a shaft 71 adjustable in height by a worm, not shown, operated by a nandwheel 72.

The shaft 71 lowerly carries the tools for acting on the tyre during its mounting and removal.

Said tools comprise an idle roller 13 of cylindrical section, its axis of rotation coinciding with the axis of the shaft 71, and a hook 14 the function of which is explained hereinafter and which is secured to the vertical wall of an L-shaped plate 15 fixed to the shaft 71 upstream of the roller 13.

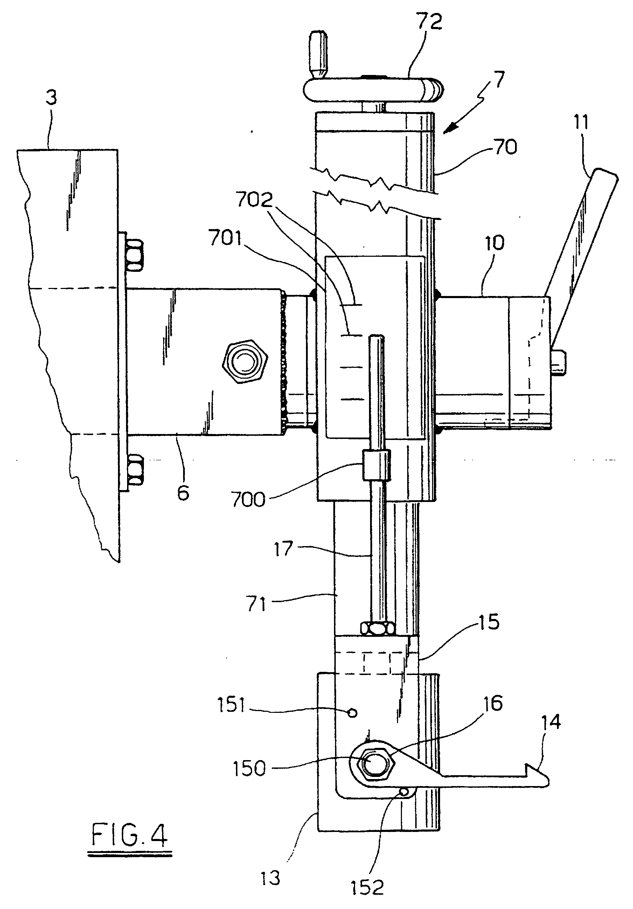

With reference to Figures 3 and 4, the hook 14 is mounted on a threaded pin 150 extending from the plate 15 and is locked thereon by a nut 16 with an interposed spring washer, not shown.

This enables the hook 14 to be positioned horizontally as shown in Figure 2, or vertically as shown in Figure 3, depending on the operation to be carried out.

The plate 15 is also provided with two pegs 151 and 152 acting as limit stops for the hook 14.

From the plate 15 there extends a vertical rod 17 guided by a bush 700 welded onto the tube 70, on which an adhesive plate 701 carrying graduated marks 702 indicating different wheel rim diameters is attached. The purpose of said rod 17 is to indicate at which height the shaft 71 has to be set to match the diameter of the wheel rim to be operated upon.

Two mutually facing identical C-section bars are fixed to the sides of the base 2 and are joined together at their front by a bar 20.

The two section bars 18 and 19 act as a guide rails for the carriage 21, which receives and positions the wheel R. As shown in Figure 3, this carriage comprises two equal and opposite uprights 211 and 212, and is provided at its base with wheels 213 which run within said guide rails to enable the carriage 21 to move horizontally. The two uprights 211 and 212 are joined together by a vertical plate 214 which is secured to them by virtue of wheels 215 which enable said plate to move vertically. A platform 216 for supporting the wheel R extends frontwards from the plate 214.

The front edge of the platform 216 comprises two appendices 217 and 218, in each of which there is inserted one end of a pin of an idle shaft 219, the other end of the pin being inserted into the plate 214.

The vertical movement of the platform 216 is provided by two identical pneumatic cylinder-piston units positioned inside the uprights 211 and 212 respectively, their rods being connected by known means to the plate 214. The two cylinder-piston units 220 and 221, which are fed in parallel, are operated by opening a compressed air feed cock controlled by a lever 222 positioned on the upright 212.

The invention also includes the tool 25, which comprises two plates 250 and 251 joined together at one end to form an acute angle defining a seat for receiving the edge of the wheel rim. To the plate 250 there is fixed a spring 252, to the other end of which there is fixed a hook 253. A handle 254 for holding the tool 25 extends from the plate 250.

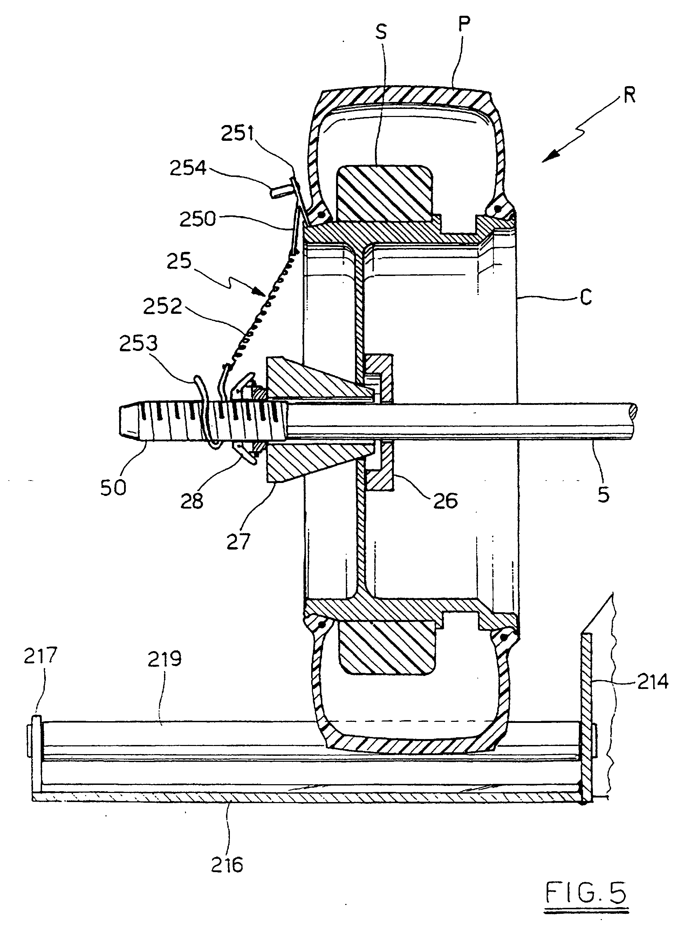

Figure 5 shows a wheel R mounted on the machine. The wheel R comprises the wheel rim C, having a seat for receiving the toroidal ring S, and on which the tyre P is mounted. The wheel rim C rests against a cup piece 26 welded to the shaft 5, and is maintained resting against it by a cone 27 and the nut 28, of quick locking type, which by being screwed onto the threaded portion 50 of the shaft 5 maintains the cone 28 in the position shown in Figure 5.

The tyre P and the ring S are mounted on the wheel rim C by the following operations.

Firstly the operator moves the carriage 21 manually along the guides 18 and 19 into its forward loading position. He then rests the wheel rim on the shafts 219 in a vertical position and with the larger-diameter edge facing the column 3. He then moves the carriage 21 backwards until the wheel rim C lies at the front end of the shaft 5. At this point he turns the lever 222 to operate the cylinder-piston units 220 and 221, which move the platform 216 vertically to bring the hub of the wheel rim C in line with the shaft 5. Having reached the correct height the operator halts compressed air feed to the two cylinder-piston units and moves the carriage 21 rearwards until the wheel rim C rests against the cup piece 26, then he locks the wheel rim in position by the cone 27 and nut 28.

It should be noted that the two cylinder-piston units are pneumatic as this enables the operator to finely adjust the height of the platform on which the wheel rim C is positioned, by utilizing the compressibility of the air.

Figures 5, 6, 7, 8, 9 and 10 show the successive steps in mounting the tyre.

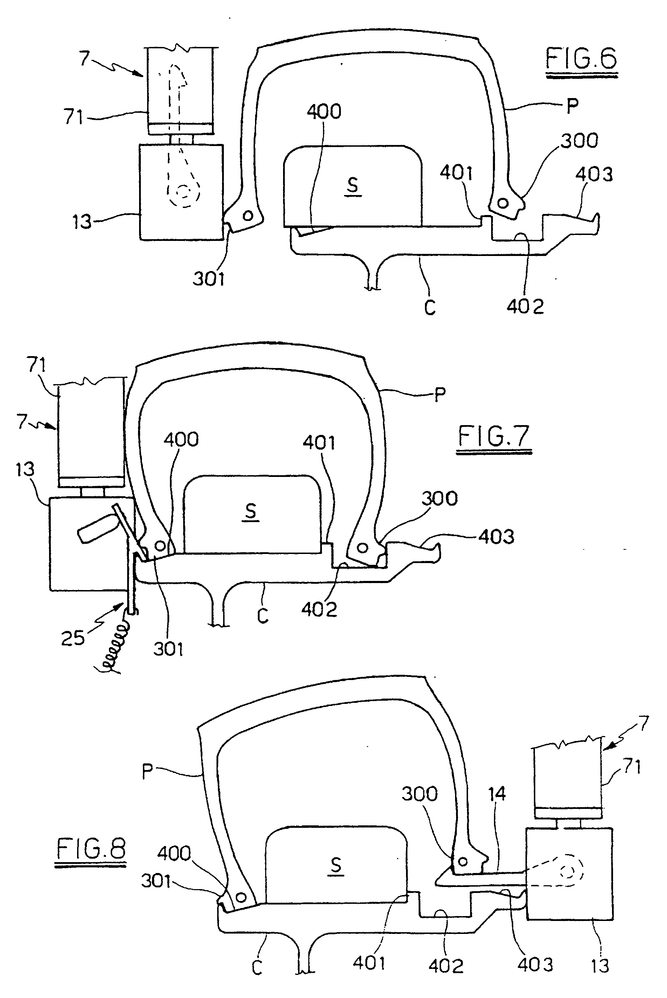

When the wheel rim has been fixed in position, the operator mounts the larger-diameter bead 300 of the tyre P and the toroidal support ring S onto the wheel rim 8, as shown in Figure 6.

At this point the operator sets the telescopic bar 7 in its horizontal position and causes the bar 6 to advance so as to move the telescopic bar 7 to tne left of the wheel rim, as shown in Figure 6, then he vertically repositions the bar 7.

Then, using the already described means, he adjusts the height of the roller 13 on the basis of the wheel rim diameter, and then moves the bar 6 rearwards to bring the roller 13 into contact with the bead 301 of the tyre P, and forces that bead portion in contact with the roller 13 into its seat 400 in the wheel rim.

The tool 25 is used to facilitate the insertion and retention of the entire bead 301 in the seat 400 in the wheel rim C. The tool 25 is held in the position shown in Figures 5 and 7 and the shaft 5 is made to rotate through about 360°. By virtue of the pressure exerted by the roller 13 and the retention action of the tool 25, the entire bead 301 becomes inserted into the seat 400.

Simultaneously the ring S moves until it rests against the projecting edge 401 of the wheel rim C, and the bead 300 moves into the channel 402.

Having done this, to complete the mounting of the tyre the operator has to insert the bead 300 into the seat 403 in the wheel rim C.

For this purpose he has firstly to extract the bead 300 from the channel 402. To do this he positions the telescopic bar 7 between the edge 404 of the wheel rim and the column 3 then, as shown in Figure 8, he places the hook 14 in a horizontal position and grips the bead 300 with it.

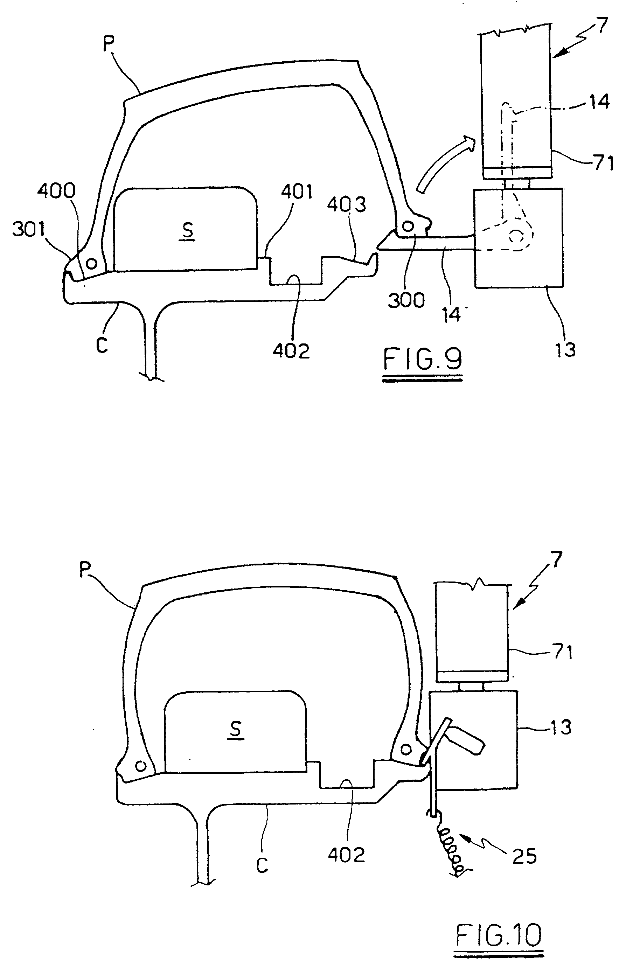

The operation is facilitated by slightly raising the platform 216 so as to raise the bead 300 from the cnannel 402. He then withdraws the bar 6 and rotates the shaft 5 to bring the bead 300 to the outside of the wheel rim, as shown in Figure 9.

At this point the bead 300 has to be inserted into the seat 403, which, after vertically repositioning the hook 14, is done by carrying out the same operations described for inserting the bead 301 into the seat 400.

To remove the tyre from the wheel rim, the wheel R is positioned as in Figure 5, after which the following operations are carried out:
- the tyre is deflated,
- the wheel is put in the working position shown in Figure 5,
- the roller 13 is brought into contact with the bead 301 and the bar 6 is withdrawn slightly in order to create a gap between the bead and the edge of the wheel rim C, into which a usual lever is inserted,
- the shaft 5 is rotated through about 20° and a second lever is inserted,
- using the two levers a portion of the bead 301 is extracted from the wheel rim,
- the bar 7 is positioned on the other side of the tyre,
- the roller 13 is placed in contact with the tyre bead 300, the bar 6 is advanced and the shaft 5 rotated to move the bead 300 beyond the projecting edge 401,
- at this point the tyre can be withdrawn from the wheel rim together with the toroidal ring S.

Finally it should be noted that the motor 4 can be either pneumatic or electric, and that the operation of the bar 6 is controlled by a usual pedal unit 30 shown in Figure 3.

## Claims

1. A tyre removal machine (1) comprising a base (2), a column (3) supporting a horizontal first bar (6) slidable relative to the column, a vertically slidable second bar (7) at the end of the first bar and, positioned at the end of said second bar, tools (13, 14) for acting on the tyre bead, **characterised by** comprising a rotatable shaft (5) projectingly emerging from the base to support the wheel rim, a carriage (21) which slides on the base (2) in a direction parallel to the rotatable shaft and carries a vertically slidable plattform carrying means for supporting the wheel in a vertical position with its axis lying in the vertical plane containing the rotatable shaft.

2. A machine as claimed in claim 1, **characterised in that** said second bar (7) is a telescopic bar having its outer part associated with the first bar (6) on such a manner as to be able to be set in a horizontal position or in a vertical position, means (100, 101) being provided to lock said outer part in the selected position.

3. A machine as claimed in claim 1, **characterised by** comprising a separate tool (25) composed of two plates (250, 251) joined together at an acute angle to form a seat for receiving the edge of the wheel rim (C), and elastic means (252) terminating with a hook (253) intended to engage said rotatable shaft.

4. A machine as claimed in claim 1, **characterised in that** the tools positioned at the end of said second bar (7) comprise an idle roller (13) coaxial with said second bar and a harpoon hook (14) arranged to assume a first position in which it projects laterally from said second bar, and a second position in which it is parallel to said second bar.

5. A machine as claimed in claim 4, **characterised in that** said hook (14) is shaped as a harpoon with a rectilinear shank.

6. A machine as claimed in claim 1, **characterised in that** the slidable part (71) of the second bar (7) comprises a threaded seat into which there is screwed a threaded rod rotatable about the fixed part (70) of said second bar and associated with an operating handwheel (72).

7. A machine as claimed in claim 1, **characterised in that** said rotatable shaft (5) is operated by an electric motor.

8. A machine as claimed in claim 1, **characterised in that** said rotatable shaft (5) is operated by a pneumatic motor.

9. A method for mounting asymmetric tyres on their respective wheel rims by the machine claimed in claims to 6, **characterised by** comprising the following operations:
- when the wheel rim (C) has been fixed onto the rotatable shaft (5) with its larger-diameter edge facing the machine column (3),
- the operator mounts the larger-diameter bead (300) of the tyre (P) and the toroidal support ring (S) onto the wheel rim (C);
- he sets the telescopic second bar (7) in its horizontal position and causes the first bar (6) to advance so as to move the second bar to that side of the wheel rim distant from the column;
- he vertically repositions the second bar;
- he adjusts the height of the idle roller (13) positioned at the end of the second bar on the basis of the wheel rim diameter;
- he moves the first bar rearwards to bring the idle roller into contact with the smaller-diameter bead (301) of the tyre (P) and forces that bead portion in contact with the idle roller into the facing seat (400) in the wheel rim;
- he detaches the tool (25) and positions it astride the edge of the wheel rim, fixing it elastically to the rotatable shaft, and
- rotates the rotatable shaft through about 360°;
- he positions the second bar between the larger-diameter edge (300) of the wheel rim and the column (3) on the base;
- then he holds the hook (14) in a horizontal position and inserts it under the larger-diameter bead of the tyre;
- he extracts said bead from the edge (404) of the wheel rim by withdrawing the first bar and rotating the wheel rim through about 360° ;
- after vertically repositioning the harpoon-like hook (14) he reinserts the bead (300) into the seat (402) in the wheel rim from the outside by carrying out the operations described for inserting the smaller-diameter beady (301).

10. A method for removing asymmetric tyres from their respective wheel rims by the machine claimed in claims 1 to 6, **characterised by** comprising the following operations:
- the tyre is deflated,
- the wheel is placed on the rotatable shaft (5),
- the idle roller (13) is placed in contact with the smaller-diameter bead (301) and the first bar (6) is withdrawn slightly in order to create a gap into which a usual lever is inserted,
- the rotatable shaft (5) is rotated through about 20° and a second lever is inserted,
- using the two levers a portion of the bead is extracted from the wheel rim,
- the rotatable roller (13) is brought into contact with the larger-diameter bead 300, the first bar (6) is advanced and the rotatable shaft (5) rotated to move the larger-diameter bead beyond the projecting edge against which the toroidal ring (5) rests,
- at this point the tyre can be withdrawn from the wheel rim.

## Patentansprüche

1. Reifendemontagemaschine (1), die eine Basis (2) und eine Säule (3) aufweist, die eine im Verhältnis zu der Säule gleitend bewegbare horizontale erste Stange (6), eine vertikal gleitend bewegbare zweite Stange (7) an dem Ende der ersten Stange und an dem Ende der zweiten Stange zum Einwirken auf den Reifenwulst positionierte Werkzeuge (13, 14) trägt,
**dadurch gekennzeichnet, dass**
sie eine zum Tragen der Radfelge von der Basis hervorstehende, drehbare Welle (5) und einen Trägerschlitten (21) aufweist, der auf der Basis (2) in einer parallel zu der drehbaren Welle verlaufenden Richtung gleitet und ein vertikal gleitend bewegbares Plattformträgermittel zum Tragen des Rades in einer Vertikalposition trägt, dessen Achse in der die drehbare Welle enthaltenden Vertikalebene liegt.

2. Maschine nach Anspruch 1,
**dadurch gekennzeichnet, dass**
die zweite Stange (7) eine Teleskopstange ist, deren äußerer Teil so mit der ersten Stange (6) verbunden ist, dass sie in einer Horizontalposition oder in einer Vertikalposition einstellbar ist, wobei Mittel (100,101) zur Arretierung des äußeren Teils in der ausgewählten Position vorgesehen sind.

3. Maschine nach Anspruch 1,
**dadurch gekennzeichnet, dass**
sie ein separates Werkzeug (25) aufweist, das aus zwei Platten (250,251) besteht, die in einem spitzen Winkel so miteinander verbunden sind, dass sie einen Sitz zur Aufnahme der Kante der Radfelge (c) bilden, sowie elastische Mittel (252), die in einem zur Ineingriffnahme der drehbaren Welle vorgesehenen Haken (253) enden.

4. Maschine nach Anspruch 1,
**dadurch gekennzeichnet, dass**
die an dem Ende der zweiten Stange (7) positionierten Werkzeuge eine zu der zweiten Stange koaxial angeordnete Freilaufrolle (13) und einen Harpunenhaken (14) umfassen, der so angeordnet ist, dass er eine erste Position, in welcher er seitlich von der zweiten Stange hervorsteht, und eine zweite Position einnimmt, in welcher er parallel zu der zweiten Stange verläuft.

5. Maschine nach Anspruch 4,
**dadurch gekennzeichnet, dass**
der Haken (14) in Form einer Harpune mit einem geradlinigen Schaft ausgebildet ist.

6. Maschine nach Anspruch 1,
**dadurch gekennzeichnet, dass**
der gleitend bewegbare Teil (71) der zweiten Stange (7) einen mit Innengewinde versehenen Sitz aufweist, in den eine um den feststehenden Teil (70) der zweiten Stange drehbare Gewindestange eingeschraubt wird, die mit einem Bedienungs-Handrad (72) verbunden ist.

7. Maschine nach Anspruch 1,
**dadurch gekennzeichnet, dass**
die drehbare Welle (5) durch einen Elektromotor betätigt wird.

8. Maschine nach Anspruch 1,
**dadurch gekennzeichnet, dass**
die drehbare Welle (5) durch einen Druckluftmotor betätigt wird.

9. Verfahren zur Montage asymmetrischer Reifen auf ihren jeweiligen Radfelgen mittels der in den Ansprüchen 1 bis 6 beanspruchten Maschine,
**dadurch gekennzeichnet, dass**
es die folgenden Vorgänge umfasst:
- Wenn die Radfelge (c) auf der drehbaren Welle (5) befestigt wurde, wobei ihre einen größeren Durchmesser aufweisende Kante der Maschinensäule (3) gegenüberliegt,
- der Bediener den einen größeren Durchmesser aufweisenden Wulst (300) des Reifens (P) und den toroidalen Trägerring (S) auf der Radfelge (c) montiert;
- er die teleskopische zweite Stange (7) in ihre Horizontalposition einstellt und die erste Stange (6) zum Vorrücken veranlasst, um die zweite Stange zu der von der Säule entfernten Seite der Radfelge zu bewegen;
- er die zweite Stange vertikal neupositioniert;
- er die Höhe der an dem Ende der zweiten Stange positionierten Freilaufrolle (13) auf der Grundlage des Radfelgendurchmessers einstellt;
- er die erste Stange rückwärts bewegt, um die Freilaufrolle mit dem einen kleineren Durchmesser aufweisenden Wulst (301) des Reifens (P) in Kontakt zu bringen, und den mit der Freilaufrolle in Kontakt befindlichen Wulstabschnitt in den gegenüberliegenden Sitz (400) in der Radfelge zwingt;
- er das Werkzeug (25) löst, es rittlings auf der Kante der Radfelge positioniert, wobei er es elastisch auf der drehbaren Welle befestigt, und
- die drehbare Welle um etwa 360° dreht;
- er die zweite Stange zwischen der einen größeren Durchmesser aufweisenden Kante (300) der Radfelge und der Säule (3) auf der Basis positioniert;
- er dann den Haken (14) in einer Horizontalposition hält und ihn unter den einen größeren Durchmesser aufweisenden Wulst des Reifens einführt;
- er den Wulst durch Zurückziehen der ersten Stange und Drehen der Radfelge um etwa 360° von der Kante (404) der Radfelge abzieht;
- er nach der vertikalen Neupositionierung des harpunenähnlichen Hakens (14) den Wulst (300) von außen in den Sitz (402) in der Radfelge einführt, indem er die zum Einführen des einen kleineren Durchmesser aufweisenden Wulstes (301) beschriebenen Schritte ausführt.

10. Verfahren zur Demontage asymmetrischer Reifen von ihren jeweiligen Radfelgen mittels der in den Ansprüchen 1 bis 6 beanspruchten Maschine,
**dadurch gekennzeichnet, dass**
es die folgenden Vorgänge umfasst:
- Ablassen der Luft aus dem Reifen,
- Positionierung des Rades auf der drehbaren Welle (5),
- Inkontaktbringen der Freilaufrolle (13) mit dem einen kleineren Durchmesser aufweisenden Wulst (301) und leichtes Zurückziehen der ersten Stange (6), um einen Spalt zu erzeugen, in den ein gewöhnlicher Hebel eingeführt wird,
- Drehen der drehbaren Welle (5) um etwa 20° und Einführen eines zweiten Hebels,
- Herausziehen eines Wulstabschnittes aus der Radfelge unter Verwendung der zwei Hebel,
- Inkontaktbringen der drehbaren Rolle (13) mit dem einen größeren Durchmesser aufweisenden Wulst (300), Vorrücken der ersten Stange (6) und Drehen der drehbaren Welle (5), um den einen größeren Durchmesser aufweisenden Wulst über die hervorstehende Kante zu bewegen, gegen die sich der Toroidalring (S) abstützt,
- das zu diesem Zeitpunkt mögliche Zurückziehen des Reifens von der Radfelge.

## Revendications

1. Machine (1) d'extraction da pneumatique, comprenant une base (2), une colonne (3) de support d'une première barre horizontale (6) qui peut coulisser par rapport à la colonne, une seconde barre (7) qui peut coulisser verticalement à l'extrémité de la première barre et, placées à l'extrémité de la seconde barre, des outils (13, 14) destinés à agir sur le talon du pneumatique, **caractérisée en ce qu'**elle comprend un arbre rotatif (5) qui sort pour dépasser de la base et supporter la jante de roue, un chariot (21) qui coulisse sur la base (2) en direction parallèle à l'arbre rotatif et qui porte un dispositif de transport de plate-forme coulissant verticalement et destinée à supporter la roue en position verticale avec son axe dans le plan vertical contenant l'arbre rotatif.

2. Machine selon la revendication 1, caractécisée en ce que la seconde barre (7) est une barre télescopique dont la partie externe est associée à la première barre (6) d'une manière telle qu'elle peut être mise en position horizontale ou en position verticale, un dispositif (100, 101) étant destiné à bloquer la partie externe en position choisie.

3. Machine selon la revendication 1, **caractérisée en ce qu'**elle comprend un outil séparé (25) composé de deux plaques (250, 251) raccordées mutuellement avec un angle aigu pour former un siège de logement du bord de la jante (C) de roue, et un dispositif élastique (252) se terminant par un crochet (253) destiné à coopérer avec l'arbre rotatif.

4. Machine salon la revendication 1, **caractérisée en ce que** les outils placés à l'extrémité de la seconde barre (7) comportent un rouleau fou (13) coaxial à la seconde barre et un crochet de harpon (14) destiné à prendre une première position, dans laquelle il dépasse latéralement de la seconde barre, et une seconde position, dans laquelle il est parallèle à la seconde barre.

5. Machine selon la revendication 4, **caractérisée en ce que** la crochet (14) a une forme de harpon à tige ractiligne.

6. Machine selon la revendication 1, **caractérisée en ce que** la partie coulissante (71) de la seconde barre (7) a un siège taraudé dans lequel est vissée une tige filetée qui pout tourner autour de la partie fixe (70) de la seconde barre et est associée à un volant de manoeuvre (72).

7. Machine selon la revendication 1, **caractérisée en ce que** l'arbre rotatif (5) est commandé par un mateur électrique.

8. Machine selon la revendication 1, **caractérisée en ce que** l'arbre rotatif (5) est commandé par un moteur pneumatique.

9. Procédé de montage de pneumatiques asymétriques sur leur jante respective de roue par la machine selon les revendications 1 à 6, **caractérisé en ce qu'**il comprend les opérations suivantes :
lorsque la jante (C) de roue a été fixée sur l'arbre rotatif (5) avec son bord de plus grand diamètre tourné vers la colonne (3) de la machine,
l'opérateur monte le talon (300) de diamètre relativement grand du pneumatique (P) et un anneau (S) de support toroïdal sur la jante (C) de roue,
il place la seconde barre téleseopiqua (7) dans sa position horizontale et provoque l'avance de la première barre (6) afin que la seconde barre soit déplacée vers le côté de la jante de roue distant de la colonne,
il change la position verticale de la seconde barre,
il ajuste la hauteur du rouleau fou (13) positionné à l'extrémité de la seconde barre en fonction du diamètre de la jante de roue,
il déplace la première barre vers l'arrière pour placer le rouleau fou au contact du talon (301) de diamètre relativement petit du pneumatique (P) et chasse cette partie de talon au contact du rouleau fou dans le siège (400) en regard de la jante de roue,
il sépare l'outil (25) et le positionne par chevauchement du bord de la jante de roue, en le fixant élastiquement a l'arbre rotatif, et
il fait tourner l'arbre rotatif de 360° environ,
il positionne la seconde barre entre le bord de diamètre relativement grand (300) de la jante de roue et la colonne (3) sur la base,
puis il maintient la crochet (14) en position horizontale et l'insère sous le talon de diamètre relativement grand du pneumatique,
il extrait, le talon du bord (404) de la jante de roue par retrait de la première barre et rotation de la jante de roue d'environ 360', et
après changement de position verticale du crochet en forme de harpon (14), il insère à nouveau le talon (300) dans le siège (402) de la jante de roue depuis l'extérieur pour exécuter les opérations décrites pour l'insertion du talon de diamètre relativement petit (301).

10. Procédé d'extraction de pneumatiques asymétriques de leur jante de roue respective à l'aide de la machine selon les revendications 1 à 6, **caractérisé en ce qu'**il comprend les opérations suivantes :
le pneumatique est dégonflé,
la roue est placée sur l'arbre rotatif (5),
le rouleau fou (13) est placé au contact du talon (301) de diamètre relativement petit et la première barre (6) est légèrement retirée pour créer un espace dans lequel est inséré un démonte-pneu habituel,
l'arbre rotatif (5) est tourné d'environ 20° et un second démonte-pneu est inséré,
à l'aide des deux demonte-pneus, une partie du talon est extraite de la jante de roue,
le rouleau rotatif (13) est mis au contact du talon (300) de diamètre relativement grand, la première barre (6) est avancée et l'arbre rotatif (5) est tourné afin que le talon de diamètre relativement grand soit déplacé au-delà du bord en saillie contre lequel repose l'anneau toroïdal (5), et
à ce moment, le pneumatique peut être retiré de la jante de roue.
